# EUROPEAN PATENT APPLICATION

(11) **EP 3 115 950 A1**
(43) Date of publication of application: **11.01.2017**
(21) Application number: 15002000.6
(22) Date of filing: 06.07.2015
(51) Int. Cl.: G06Q 20/04, G06Q 20/06, G06Q 20/32

(54) **METHOD, USER ELECTRONIC DEVICE, MANAGEMENT SERVER AND CHECKING DEVICE FOR MANAGING LUNCHEON VOUCHERS**

(71) Applicant: Peoplelink s.r.l., 20153 Milano (MI) (IT)
(72) Inventor: HUGNOT, Gino Massimo, 20154 Milano (MI) (IT)

(57) **Abstract**

Method for managing the luncheon vouchers wherein a user equipped with a user electronic device, a management server of an employer, a checking device of a catering supplier are provided, the method comprising a collecting phase of luncheon vouchers wherein the following steps are performed: A - in said server, recording and identifying said user; B - through said user electronic device inserting attendance information of said user related to a workplace; and transmitting said information to said management server; C - in said server generating one or more meal codes related to credits for obtaining and/or enjoying one or more meals on the basis of said attendance information; D - associating said one or more meal codes to said user; and a consumption phase of luncheon vouchers wherein the following steps are performed: E - through said user electronic device and said checking device, identifying a user; F - selecting one or more meals to be received; G - updating the meal codes associated to said user on the basis of step F.

## Description

### TECHNICAL FIELD

The present invention relates to a method for managing electronic luncheon vouchers and a system arranged for implementing said management.

### STATE OF THE ART

Many workers receive luncheon vouchers corresponding to a credit for enjoying a meal. The employer assigns luncheon vouchers to each employee as function of the number of days worked by them. The employee spends the luncheon voucher in an agreed upon retailer and the latter receives the money by the company that emits the luncheon voucher. For example, in a month an employee works 22 days and he obtains the right to 22 luncheon vouchers. Conventionally, the luncheon vouchers accumulated are given to the employee the next month. The luncheon vouchers can be on paper or memorized on a magnetic card and, for using them, the employee needs to remove one by one from a collecting bock or pass the card in an electronic device used by the retailer.

This management has some limits that are emphasized by the new working scenarios: several companies have employees that usually work out of office or in business trip. Providing to these employees information, documents or materials (e.g. luncheon vouchers) is often complicated.

### SUMMARY

The Applicant realizes that the known solutions do not provide a sufficient flexibility both to the employer and to the employees.

The main scope of the present invention is to provide a method for managing the luncheon vouchers that allows to simply and economically overcome the drawbacks of the prior art.

The first specific scope of the present invention is to provide a method for a more rapid and correct management of luncheon vouchers assigned to a user.

The inventive concept on which the present invention is based on the synergic use of a smartphone provided to an employee, a server provided to an employer and a checking device provided to a catering supplier, all of them conveniently configured to guarantee a reliable electronic management of the luncheon vouchers.

In general, the present invention relates to a method for managing the luncheon vouchers wherein a user equipped with a user electronic device, a management server of an employer, a checking device of a catering supplier are provided, the method comprising a collecting phase of luncheon vouchers wherein the following steps are performed:
A - in said server, recording and identifying said user;
B - through said user electronic device inserting attendance information of said user related to a workplace; and transmitting said information to said management server;
C - in said server generating one or more meal codes related to credits for obtaining and/or enjoying one or more meals on the basis of said attendance information;
D - associating said one or more meal codes to said user;
   and a consumption phase of luncheon vouchers wherein the following steps are performed:
E - through said user electronic device and said checking device, identifying a user;
F - selecting one or more meals to be received;
G - updating the meal codes associated to said user on the basis of step F.

The present invention also relates to a user electronic device comprising:
- first storing means configured to memorize at least one or more meal codes corresponding to credits for obtaining and/or enjoying one or more meals;
- second storing means for memorizing a program suitable for managing said one or more meal codes;
- a processor connected to said first and second storing means and configured for executing said program;
- communicating means configured to transmit/receive data to/from a telecommunication network;
wherein said program comprises a code that when executed by said processor:
- memorizes attendance information of said user;
- transmits said attendance information through said communication means;
- updates said one or more luncheon vouchers when a command signal occurs and/or transmits information related to the update of said one or more meal codes.

In particular, said user electronic device can comprise a data communication device for proximity communications, preferably of the type NFC, connected to said first and second storing means and said processor.

Said command signal being generated by said communication device.

The present invention also relates to a management server comprising:
- communication means configured to communicate through a public communication network, in particular internet;
- first storing means configured to memorize for each user at least a series of meal codes comprising credits for obtaining and/or enjoying one or more meals;
- second storing means for memorizing a program suitable for managing said meal codes;
- a processor connected to said communication means and to said first and second storing means of the server, and adapted to execute said program;
wherein said program comprising code that when executed by said processor:
- creates corresponding meal codes on the basis of said attendance information received by said user electronic device;
- associates said meal codes to said user;
- updates said meal codes associated to said user.

The present invention further relates to a checking device comprising:
- storing means configured to memorize at least a meal code;
- data communication means for proximity communications connected to said storing means;
wherein said communication means is configured to transmit said meal code to a management server, when said user electronic device is close to the checking device.

Finally, a further aspect of the present invention relates to a management system of said luncheon vouchers comprising:
- a plurality of user electronic devices;
- a management server;
- at least a group of checking devices respectively associated to a plurality of catering suppliers;
wherein the users receive and/or enjoy one or more meals by means of respective user electronic devices according to the previously described method;
wherein said management server manages meal codes associated to credits for obtaining and/or enjoying one or more meals according to the previously described method;
wherein said checking devices control the obtaining and/or the enjoying of one or more meals according to the previously described method.

Further advantageous technical features are described in the depending claims.

### FIGURES

Technical characteristics of the present invention and its advantages, will be better understood thanks to the following description and drawings of different embodiments of said invention given as non limitative examples thereof, wherein:
- figure 1 illustrates a block diagram of operations intended to execute a method according to the present invention;
- figure 2 illustrates a system configured to implement the method according to the present invention.

### DETAILED DESCRIPTION

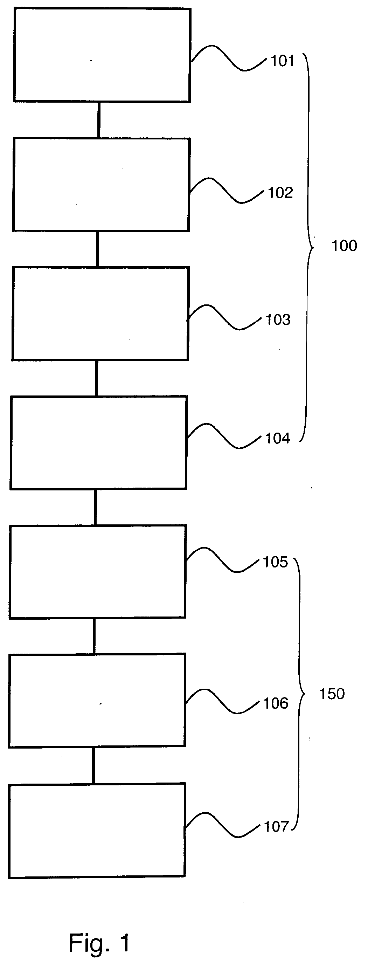

Said description and said figures are to be considered illustrative and non-restrictive; therefore the present invention could be implemented according to other and different form; furthermore, said drawings are schematic and simplified. Figure 1 shows a block diagram of operations implemented according to the present invention.

According to a method for managing the luncheon vouchers of the present invention, a user equipped with a user electronic device (typically a smartphone, as referred in the following description), a management server of an employer, and a checking device (typically a *Point of Sale,* POS) of a catering supplier, for example a bar or a restaurant, are provided.

Conceptually, the method according to the present invention is divided in two phases: a first collecting phase of luncheon vouchers wherein a user (corresponding to an employee) collects luncheon vouchers under pre-set rules based on the performed working days; a second consumption phase of the luncheon vouchers wherein the user enjoys a meal (or similar) consuming one or more luncheon vouchers previously accumulated. In this sense, in the preferred embodiments, a user can consume luncheon vouchers previously accumulated, in other words can't have a debt of luncheon vouchers.

The blocks 101 to 104, grouped with the reference 100, indicate the collecting phase of luncheon vouchers wherein the steps here-below described are performed.

The block 101 indicates the census and identification operations in the management server provided to the employer. Typically, the census operation occurs when a first use of the system according to the present method is performed, for example when a new user is added to the list of employees of the employer or when an employee subscribes the service.

The census operation comprises the steps for registering completely and univocally a user.

The identification step allows to univocally identify the user entering in the server. In an embodiment, a record of the user is created including the access information (in the census operation); while in the identification step, the user is identified through the access information.

After the census and identification operations, the block 102 occurs and a user, through his smartphone, inserts the attendance information related to the place of work where he's working. In other words, by means of his smartphone, the user registers his clock in at work. According to different work contract regulating the employment between employer and employee, the clock in/out information can be one, more than one, etc.

The attendance information, thus the electronic clock in/out performed through the smartphone, are transmitted to the management server. For that purpose, different ways to transmit the attendance information are foreseen, for guaranteeing the best alignment between attendance information created and stored in the smartphone and the attendance information stored in the server.

Further on, the step 103 is reached, wherein in the management server one or more meal codes related to credit for obtaining and/or enjoying one or more meals on the basis of the attendance information are generated.

Advantageously, the calculation of meal codes for each user can be performed day-by-day.

In a first case, a user can have luncheon vouchers obtained in the previous working days, in order to assure that he has effectively worked in the previous working days and he has effectively obtained the right to a luncheon voucher.

In a second case, the meal code is generated after a predetermined time lag from the clock in of the working day.

Several ways can be performed for generating the meal codes on the basis of the attendance information received, the following embodiments are examples of the specific contract that the employer can have with the employee (thus the user). Subsequently, the block 104 occurs and the meal codes generated for the user are associated to him. In this way, a continuity between the codes already created and those under elaboration is maintained.

The block 104 concludes the storing step 100.

An example is provided for the sake of clarity. A user X is an employee of the company Y. On the server of the company Y the personal data and the attendance information of the user X are added for completing the census operation. In this way, the user X can access the server by means of his smartphone for controlling the information. If the user X, for contract, needs to clock in and clock out, he can notify his presence at work clocking in by means of his smartphone and, at the end of the working day, notifies the clocking out. These information are sent to the management server of employer. If the user X has for contract the right to a meal for each worked day, the management server, on the basis of this rule, creates a meal code and associates it to the user X.

Subsequently to the storing step 100, it's possible to proceed with the consumption step of the luncheon vouchers, wherein the steps represented by blocks 105, 106 and 107 (referenced with 150) are performed.

As shown in the block 105, by means of the smartphone and the checking device, the user is identified. This step involves the smartphone of the user that sends control information and the checking device that receives said control information and check their truthfulness. In an embodiment, said information are included in the luncheon voucher. The meal code comprises an header wherein the control information are included (for example the user name and the IMEI code of the smartphone) and a payload wherein the information associated to the transaction are included, for example the number of available luncheon vouchers, the value of each luncheon voucher, etc.

After the check of the block 105, the block 106 is reached, wherein one or more meals to be dispensed are selected, thus recovered from the remote server.

After the selection of said one or more codes, the transmission of these codes to the checking device can occur in different ways. For example, it can be performed by the catering supplier which inserts the type of meal requested by the user (for example a complete meal) or, similarly, it can be performed by the user through his electronic device.

On the basis of the selection of meal performed, the meal codes associated to the user are updated, according to the characteristics here-below described.

In an embodiment, the attendance information comprise geo-positioning information obtained from the user's smartphone, for example through a GPS system. In this way, the presence of the user is acquired even when he has a business trip, thus when he's not in the place where habitually he works. In this way, the collection of luncheon vouchers can continue also in this case.

In an embodiment, a centralized management of the luncheon vouchers is foreseen in the management server of the employer. According to this solution, the following steps are performed:
The generated meal codes are stored in the management server.

During the identification process, a part from the user identity check through the checking device of the supplier, the electronic identity of the user is checked on the management server.

In an embodiment, the checking device sends the information received from the server to the management server, the server performs the check and sends a corresponding notification message to the checking device. In this way, the meal selection can be performed.

In a context of centralized management, the updating of said codes is performed by the management server. In an embodiment the checking device sends to the server the type of meal requested by the user, the server checks and updates the meal codes associated to the user. In the context of a centralized management, the smartphone of the user is a device for providing the authentication credentials to the checking device. The management and elaboration of the codes is performed in the management server.

In an alternative embodiment, the management of the luncheon vouchers is split between the management server of the employer, the checking device of the provider and the user smartphone.

In this context, the meal codes are generated and stored in the server and transmitted to the smartphone. Consequently on the smartphone are memorized one or more meal codes besides the identify information. Therefore, the smartphone of the user communicates to the checking device the identity information and/or the meal codes (or the meal codes, depending on the selection).

Said communication step can occur through a command signal sent by the smartphone to the checking device, reading the code on the smartphone by means of the checking device, or communicating the code to the service supplier which digits the code on the checking device.

Optionally, through the checking device, the number of meals selected are sent to the management server. In this way, the management server is enabled for a control of the residual credits stored in the smartphone.

The smartphone performs the updating of the meal codes. In an embodiment, this operation is performed marking as used (for example associating a using code) the meal code transmitted to the checking device.

Later on the meal codes stored in the server and those memorized in the user smartphone are compared, in order to align the corresponding information. For example, it is assumed that the smartphone contains three meal codes and the server contains three meal codes too. In the using phase, the user uses a meal code through the smartphone. In that moment, the smartphone contains two meal codes that can be used, while the server still contains three meal codes. In the control step, the server verifies the consumption of meal codes associated to the user and updates his availability.

In an embodiment, the meal code is memorized as a QR code, so that the user cn show his meal code displayed on the screen of his smartphone. The checking device comprises image acquisition means suitable for acquiring the image of a meal code codified as a QR code.

In an alternative embodiment, the codes memorized on the smartphone are sent to the checking device through proximity communications. In this sense, both the smartphone and the checking device are equipped with corresponding proximity communication means.

In a further embodiment, the user extracts a code from those memorized on the smartphone and communicates it to the service provider which inserts it on the checking device, for example through a keyboard.

The present invention further relates to a user electronic device (*smartphone*) comprising:
- first storing means configured to memorize at least one or more meal codes corresponding to credits for obtaining and/or enjoying one or more meals;
- second storing means for memorizing a program suitable for managing said one or more meal codes;
- a processor connected to said first and second storing means and configured for executing said program;
- communicating means configured to transmit/receive data to/from a telecommunication network;
wherein said program comprises a code that when executed by said processor:
- memorizes attendance information of said user;
- transmits said attendance information through said communication means;
- updates said one or more meal codes when a command signal occurs and/or transmits information related to the update of said one or more meal codes.

Said smartphone can optionally comprise a communication device for proximity communication, in particular of the type NFC, connected to said first and second storing means and to said processor.

Said command signal is generated by said communication device and allows to exchange information related to said one or more meal codes between said smartphone and said checking device.

In a particular version of the present invention the electronic device can be a tablet, a laptop, or a fix computer, and in any case a device comprising a system of connection to the internet network.

A further aspect of the present invention relates to a management server comprising:
- communication means configured to communicate through a public communication network, in particular internet;
- first storing means configured to memorize for each user at least a series of meal codes comprising credits for obtaining and/or enjoying one or more meals;
- second storing means of the server for memorizing a program suitable for managing said meal codes;
- a processor connected to said communication means and to said first and second storing means of the server, and adapted to execute said program;
wherein said program comprising code that when executed by said processor:
- creates corresponding meal codes on the basis of said attendance information received by said user electronic device;
- associates said meal codes to said user;
- updates said meal codes associated to said user.

Said updating step occurs when at least one of said codes is consumed by the user and it's so no reusable.

A further aspect of the present invention relates to a checking device comprising:
- storing means configured to memorize at least a meal code;
- data communication means for proximity communications connected to said storing means;
wherein said communication means is configured to transmit said meal code to a management server, when said user electronic device is close to the checking device.

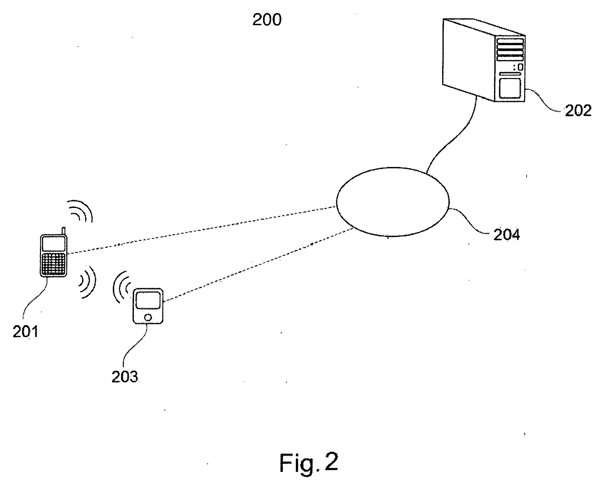

As shown in the figure 2, a further aspect of the present invention relates to a system 200 for the management of said luncheon vouchers comprising:
- a plurality of user electronic devices 201 (smartphone) associated to a plurality of users of the type previously described;
- a management server 202 of the type previously described;
- at least a group of checking devices 203 associated to a corresponding plurality of catering suppliers of the type previously described;
- a communication network 204, in particular an internet network, for connecting each other the user electronic devices 201, the management server 202 and the checking devices 203;
wherein the users receive and/or enjoy one or more meals by means of respective user electronic devices 201 according to the method previously described;
wherein said management server 202 manages meal codes associated to credits for obtaining and/or enjoying one or more meals according to the method previously described;
wherein said checking devices 203 control the obtaining and/or the enjoying of one or more meals according to the method previously described.

## Claims

1. Method for managing the luncheon vouchers wherein a user equipped with a user electronic device, a management server of an employer, a checking device of a catering supplier are provided,
the method comprising a collecting phase of luncheon vouchers wherein the following steps are performed:
A - in said server, recording and identifying said user;
B - through said user electronic device inserting attendance information of said user related to a workplace; and transmitting said information to said management server;
C - in said server generating one or more meal codes related to credits for obtaining and/or enjoying one or more meals on the basis of said attendance information;
D - associating said one or more meal codes to said user;
and a consumption phase of luncheon vouchers wherein the following steps are performed:
E - through said user electronic device and said checking device,
identifying a user;
F - selecting one or more meals to be received;
G - updating the meal codes associated to said user on the basis of step F.

2. Method according to claim 1 wherein said attendance information comprising geo-information obtained through said user electronic device in the step B.

3. Method according to any of preceding claims wherein a centralized management of said luncheon vouchers is foreseen in the said server, wherein:
- in said step C, said one or more meal codes are stored in said server;
- in said step E, identifying said user includes a further step of electronically controlling identity in said server;
- in said step G, the updating of said meal codes is performed by said server.

4. Method according to claim 3 further comprising the steps of:
- when a positive outcome occurs in said step A, generating an univocal control code and associating it to said user;
- sending said control code to said user electronic device and said checking device;
- identifying said user through said checking device by means of said control code.

5. Method according to claim 1 or 2, wherein a management distribution of said luncheon vouchers is provided wherein:
- in said step C, said one or more meal codes are stored in said server and transmitted to said user electronic device;
- said step E further includes transmitting one or more luncheon vouchers stored in said user electronic device to said checking device;
- said step F further comprises the transmission of one or more selected meals to be dispensed to said server;
- in said step F, the updating of said codes is performed by said user electronic device;
- comparing the meal codes stored in said server and in said user electronic device.

6. Method according to any of preceding claims, wherein said luncheon vouchers comprising a QR code.

7. User electronic device comprising:
- first storing means configured to memorize at least one or more meal codes corresponding to said credits for obtaining and/or enjoying one or more meals;
- second storing means for memorizing a program suitable for managing said one or more meal codes;
- a processor connected to said first and second storing means and configured for executing said program;
- communicating means configured to transmit/receive data to/from a telecommunication network;
wherein said program comprises a code that when executed by said processor:
- memorizes attendance information of said user;
- transmits said attendance information through said communication means;
- updates said one or more luncheon vouchers when a command signal occurs and/or transmits information related to the update of said one or more meal codes.

8. User electronic device according to claim 7, further comprising a data communication device for proximity communications, preferably of the type NFC, connected to said first and second storing means and said processor.

9. Management server comprising:
- communication means configured to communicate through a public communication network, in particular internet;
- first storing means configured to memorize for each user at least a series of meal codes comprising credits for obtaining and/or enjoying one or more meals;
- second storing means for memorizing a program adapted to manage said meal codes;
- a processor connected to said communication means and to said first and second storing means of the server and adapted to execute said program;
wherein said program comprising code that when executed by said processor:
- creates corresponding meal codes on the basis of said attendance information received by said user electronic device;
- associates said meal codes to said user;
- updates said meal codes associated to said user.

10. Checking device comprising:
- storing means configured to memorize at least a meal code;
- data communication means for proximity communication connected to said storing means;
wherein said communication means is configured to transmit said meal code to a management server, when said user electronic device is close to the checking device.

11. Management system of said luncheon vouchers comprising:
- a plurality of user electronic devices according to claims 7 or 8 respectively associated to a plurality of users;
- a management server according to claim 9;
- at least a group of checking devices according to claim 10 respectively associated to a plurality of catering suppliers;
wherein the users receive and/or enjoy one or more meals by means of respective user electronic devices according to the method of any of claims 1 to 6;
wherein said management server manages meal codes associated to credits for obtaining and/or enjoying one or more meals according to any of preceding claims 1 to 6;
wherein said checking devices control the obtaining and/or the enjoying of one or more meals according to the method of any of preceding claims 1 to 6.

## Amended claims

### Amended claims in accordance with Rule 137(2) EPC.

1. Method for managing the luncheon vouchers wherein a user equipped with a user electronic device, a management server of an employer, a checking device of a catering supplier are provided,
the method comprising a collecting phase of luncheon vouchers wherein the following steps are performed:
A - in said server, recording and identifying said user;
B - through said user electronic device inserting attendance information of said user related to a workplace; and transmitting said information to said management server;
C - in said server generating one or more meal codes related to credits for obtaining and/or enjoying one or more meals on the basis of said attendance information;
D - associating said one or more meal codes to said user;
and a consumption phase of luncheon vouchers wherein the following steps are performed:
E - through said user electronic device and said checking device, identifying a user;
F - selecting one or more meals to be received;
G - updating the meal codes associated to said user on the basis of step F;
wherein the user electronic device is a smartphone and the step of inserting the attendance information comprises to perform the electronic clocking in/out through the smartphone.

2. Method according to claim 1 wherein said attendance information comprising geoinformation obtained through said user electronic device In the step B.

3. Method according to any of preceding claims wherein a centralized management of said luncheon vouchers is foreseen in the said server, wherein:
- in said step C, said one or more meal codes are stored in said server;
- in said step E, identifying said user includes a further step of electronically controlling identity in said server;
- in said step G, the updating of said meal codes is performed by said server.

4. Method according to claim 3 further comprising the steps of:
- when a positive outcome occurs in said step A, generating an univocal control code and associating It to said user;
- sending said control code to said user electronic device and said checking device;
- identifying said user through said checking device by means of said control code.

5. Method according to claim 1 or 2, wherein a management distribution of said luncheon vouchers is provided wherein:
- in said step C, said one or more meal codes are stored in said server and transmitted to said user electronic device;
- said step E further includes transmitting one or more luncheon vouchers stored in said user electronic device to said checking device;
- said step F further comprises the transmission of one or more selected meals to be dispensed to said server;
- in said step F, the updating of said codes is performed by said user electronic device;
- comparing the meal codes stored in said server and in said user electronic device.

6. Method according to any of preceding claims, wherein said luncheon vouchers comprising a QR code.

7. User electronic device comprising:
- first storing means configured to memorize at least one or more meal codes corresponding to credits for obtaining and/or enjoying one or more meals;
- second storing means for memorizing a program suitable for managing said one or more meal codes;
- a processor connected to said first and second storing means and configured for executing said program;
- communicating means configured to transmit/receive data to/from a telecommunication network;
wherein said program comprises a code that when executed by said processor:
- memorizes attendance information of said user performed through an electronic clocking in/out;
- transmits said attendance information through said communication means;
- updates said one or more luncheon vouchers when a command signal occurs and/or transmits information related to the update of said one or more meal codes.

8. User electronic device according to claim 7, further comprising a data communication device for proximity communications, preferably of the type NFC, connected to said first and second storing means and said processor.

9. Management server comprising:
- communication means configured to communicate through a public communication network, in particular internet;
- first storing means configured to memorize for each user at least a series of meal codes comprising credits for obtaining and/or enjoying one or more meals;
- second storing means for memorizing a program adapted to manage said meal codes;
- a processor connected to said communication means and to said first and second storing means of the server and adapted to execute said program;
wherein said program comprising code that when executed by said processor:
- creates corresponding meal codes on the basis of attendance information received from said user electronic device, wherein the attendance information comprises clocking in/out;
- associates said meal codes to said user;
- updates said meal codes associated to said user.

10. Checking device comprising:
- storing means configured to memorize at least a meal code;
- data communication means for proximity communication connected to said storing means;
wherein said communication means is configured to transmit said meal code to a management server, when said user electronic device Is close to the checking device.

11. Management system of said luncheon vouchers comprising:
- a plurality of user electronic devices according to claims 7 or 8 respectively associated to a plurality of users;
- a management server according to claim 9;
- at least a group of checking devices according to claim 10 respectively associated to a plurality of catering suppliers;
wherein the users receive and/or enjoy one or more meals according to the method of any of claims 1 to 6, by means of respective user electronic devices;
wherein said management server manages meal codes associated to credits for obtaining and/or enjoying one or more meals according to any of preceding claims 1 to 6;
wherein said checking devices control the obtaining and/or the enjoying of one or more meals according to the method of any of preceding claims 1 to 6.
